# FASCICULE DE BREVET EUROPEEN

(11) **EP 2 563 604 B1**
(45) Date de publication et mention de la délivrance du brevet: **25.06.2014**
(21) Numéro de dépôt: 11716552.2
(22) Date de dépôt: 27.04.2011
(51) Int. Cl.: B60C 11/03, B60C 11/04, B60C 11/12

(54) **BANDE DE ROULEMENT DE PNEU POUR VEHICULE POIDS LOURD DE TYPE REMORQUE**
PROFIL FÜR EINEN REIFEN FÜR SCHWERLASTFAHRZEUGE VOM ANHÄNGERTYP
TREAD FOR A TIRE FOR A TRAILER-TYPE HEAVY VEHICLE

(30) Priorité: 30.04.2010 FR 1053376
(43) Date de publication de la demande: 06.03.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: FOUCHER, Benoit, F-63400 Chamalières (FR); BECHON, Hervé, F-63430 Pont-du-château (FR); MANSUY, Philippe, F-63118 Cebazat (FR)
(74) Mandataire: Diernaz, Christian
(86) Numéro de dépôt international: PCT/EP2011/056663
(87) Numéro de publication internationale: WO 2011/135000

(56) Documents cités:
- GB-A- 2 401 588
- US-A- 5 622 575

## Description

### DOMAINE DE L'INVENTION

La présente invention concerne les pneus pour véhicules poids lourd et plus particulièrement les pneus destinés à équiper les essieux porteurs des véhicules de type remorque à trois essieux. Elle concerne encore plus spécifiquement le dessin de sculpture de la bande de roulement de tels pneus.

### ÉTAT DE LA TECHNIQUE

Un pneu pour véhicule poids lourd comprend des bourrelets destinés à être en contact avec une jante de montage, ces bourrelets se prolongeant radialement vers l'extérieur par des flancs eux mêmes se raccordant de part et d'autre d'une partie de sommet, cette dernière étant recouverte par une bande de roulement dont la fonction est d'assurer le contact pendant le roulage avec la route.

De tels pneus comprennent une armature de carcasse ancrée dans les bourrelets, cette armature s'étendant dans les flancs jusqu'au sommet du pneu. Cette armature de carcasse formée d'une ou plusieurs nappes renforcées est surmontée radialement vers l'extérieur dans la partie de sommet du pneu par une armature de sommet elle même formée par une pluralité de nappes renforcées.

La bande de roulement d'un pneu a une épaisseur appropriée pour un usage et est en outre pourvue d'un dessin de sculpture formé d'éléments de relief tels des nervures et des blocs, ces éléments étant délimités par des rainures.

### Définitions de termes employés dans la présente demande :

Une direction radiale désigne une direction perpendiculaire à l'axe de rotation du pneu.

Une direction axiale ou transversale désigne une direction parallèle à l'axe de rotation du pneu.

Une direction circonférentielle désigne une direction tangente à tout cercle centré sur l'axe de rotation du pneu.

Une rainure désigne l'espace formé dans une bande de roulement entre des parois de matière sur une profondeur au plus égale à l'épaisseur de la bande, ces parois de matière ne venant pas en contact l'une sur l'autre dans les conditions usuelles de roulage du pneu.

Une incision désigne l'espace formé dans une bande de roulement entre des parois de matière sur une profondeur au plus égale à l'épaisseur de la bande, lesdites parois pouvant, au moins en partie, venir en contact l'une sur l'autre dans des conditions usuelles de roulage du pneu.

Un élément de relief désigne un bloc ou une nervure. Un élément de relief est délimité par des rainures et présente une face de contact destinée à venir en contact avec la chaussée pendant le roulage et des faces latérales coupant la face de contact selon des arêtes.

La surface de roulement d'une bande de roulement désigne l'ensemble des faces de contact de tous les éléments de relief d'une bande de roulement.

Dans le présent document on indique par « conditions nominales » d'usage d'un pneu ses conditions d'utilisation, c'est-à-dire sa pression de gonflage de référence correspondant à sa capacité de charge indiquée par l'indice de charge et le code vitesse dudit pneu, cette pression de référence et cette capacité de charge étant données par la norme européenne E.T.R.T.O.. Les normes TRA et JATMA peuvent également être employées pour des dimensions de pneus ne figurant pas dans l'E.T.R.T.O..

Parmi les véhicules poids lourd on distingue des remorques comportant plusieurs essieux non directionnels *("non steered axles"* en anglais), c'est-à-dire ne comportant qu'une seule orientation des ensembles pneu/roue montés sur ces essieux. Ces pneus ne peuvent donc être braqués pour effectuer des manoeuvres de virage. On observe depuis longtemps un problème lié à la cinématique de prise de virage pour chacun desdits essieux. Si l'un des essieux peut suivre tangentiellement une trajectoire circulaire, il ne peut en être de même pour les autres essieux. Il s'ensuit une usure irrégulière plus prononcée pour les pneus de ces essieux que pour ceux de l'essieu dont les pneus suivent une trajectoire circulaire. Par usure irrégulière, on entend une usure qui n'est pas uniforme sur toute la surface de roulement de la bande de roulement d'un pneu et qui peut conduire à un retrait prématuré dudit pneu. Tout se passe comme si les pneus des essieux ne suivant pas une trajectoire circulaire étaient soumis à une dérive induite provoquant glissement et frottement des bandes de roulement sur la chaussée et par conséquent une usure plus prononcée.

Ce problème est bien connu et plusieurs solutions ont été proposées.

Le brevet US-5622575 propose une bande de roulement dont le dessin de sculpture est asymétrique, une partie interne destinée à être positionnée vers l'intérieur du châssis du véhicule est pourvue de rainures circonférentielles et d'incisions orientées transversalement et obliquement, une autre partie externe destinée à être positionnée vers l'extérieur du véhicule est dépourvue de rainures et d'incisions. Cette dernière partie comprend une pluralité de cavités disposées selon des lignes circonférentielles.

Le brevet US-4905748 propose un dessin de sculpture combinée à des rayons de courbure différents de part et d'autre du plan médian de la bande de roulement, cette sculpture comprenant des rainures de largeurs plus étroites côté externe que côté interne.

Si ces solutions apportent une amélioration sur le plan de l'usure irrégulière, il se trouve que pour les pneus montés sur essieux ne suivant pas une trajectoire circulaire, la partie externe de ces pneus (c'est-à-dire la partie axialement à l'extérieur de leur bande de roulement) est soumise à un fort glissement par rapport à la chaussée, ce qui se traduit par une usure plus prononcée sur cette partie axialement à l'extérieur.

### BREF EXPOSÉ DE L'INVENTION

Un objectif de l'invention est précisément d'améliorer la performance en usure d'une bande de roulement des pneus sur les essieux ne suivant pas de façon tangentielle une trajectoire circulaire tout en conservant un haut niveau d'adhérence à cette bande de roulement.

Dans ce but, la bande de roulement d'un pneu pour véhicule poids lourd de type remorque comprend des bourrelets destinés à être en contact avec une jante de montage, ces bourrelets se prolongeant radialement vers l'extérieur par des flancs eux-mêmes se raccordant de part et d'autre d'une partie de sommet, cette partie de sommet étant recouverte radialement à l'extérieur par une bande de roulement ayant une épaisseur E, cette bande de roulement ayant une surface de roulement. Ce pneu comprend une armature de carcasse ancrée dans les bourrelets et s'étendant dans les flancs et dans la partie de sommet, la partie de sommet du pneu comprenant une armature de sommet.

La bande de roulement de l'invention est pourvue d'un dessin de sculpture asymétrique sur au moins une épaisseur égale à 30% de l'épaisseur totale E de la bande, de façon à former une partie externe de largeur axiale LE et une partie interne de largeur axiale LI. Par largeur axiale on entend dans la présente demande la dimension mesurée dans une direction parallèle à l'axe de rotation du pneu. La partie externe est destinée à être positionnée axialement vers l'extérieur d'un véhicule lorsque le pneu est monté sur ce véhicule et la partie interne dans le prolongement axial de la partie externe vers l'intérieur dudit véhicule.

Par ailleurs la partie interne et la partie externe sont séparées par une rainure d'orientation générale circonférentielle, cette rainure coupant la surface de roulement selon deux arêtes, une arête axialement externe et une arête axialement interne. Cette bande de roulement est caractérisée en ce que :

- la partie externe de la bande comprenant, dans la direction circonférentielle, une pluralité de bandelettes *("strips"* en anglais) rigides de largeur circonférentielle D11 (mesurée dans la direction circonférentielle) et de largeur axiale LE et de bandelettes souples de largeur circonférentielle D12 et de largeur axiale LE disposées de manière alternée (une bandelette souple est encadrée circonférentiellement par deux bandelettes rigides).

Les bandelettes rigides sont dépourvues de toute rainure et/ou cavité s'ouvrant sur la surface de roulement à l'état neuf et les bandelettes souples sont pourvues de rainures s'étendant sur toute la largeur circonférentielle D12 de ces bandelettes. Les bandelettes rigides ont une largeur circonférentielle D11 au moins égale à 7% de la largeur axiale LE de la partie externe (1).

Par largeur circonférentielle, on entend dans la présente description la dimension de la bandelette mesurée dans la direction circonférentielle.

Par bandelette, on entend dans la présente description une partie volumique ayant sensiblement la forme d'un parallélépipède de bande de roulement ayant une épaisseur égale à l'épaisseur sur laquelle est formée la sculpture selon l'invention.

Préférentiellement la largeur axiale LE de la partie externe (mesurée entre un bord axial de la bande de roulement et l'arête, la plus proche dudit bord, de la rainure séparant la partie externe de la partie interne de ladite bande) est au moins égale à 40% de la largeur axiale totale W de la bande de roulement. Cette largeur axiale totale W correspond à la largeur maximale de l'empreinte de contact avec le sol sous des conditions nominales d'usage du pneu, cette largeur étant mesurée dans la direction axiale.

Encore plus préférentiellement, cette largeur axiale LE est au plus égale à 80% de la largeur axiale W totale de contact de la bande de roulement.

Préférentiellement, la largeur circonférentielle D11 des bandelettes rigides est au moins égale à 15% de la largeur axiale LE desdites bandelettes rigides.

Un tel dessin de sculpture est réalisé sur la bande entre la surface de roulement de la bande à l'état neuf et sur une profondeur au moins égale à 30% de l'épaisseur totale de cette bande. L'épaisseur d'une bande de roulement est égale à l'épaisseur de matière qui est destinée à être usée au cours du roulage et avant retrait du pneu pourvu de cette bande en vue d'un rechapage ou d'un retrait définitif. Préférentiellement, cette profondeur est au moins égale à 50% de l'épaisseur totale de la bande. Bien entendu, ce dessin de sculpture peut être réalisé sur l'épaisseur totale E de la bande de roulement.

Le dessin de sculpture proposé permet d'avoir à la fois une grande rigidité mécanique de la bande de roulement sur la partie de la bande axialement à l'extérieur (correspondant à la largeur axiale des bandelettes rigides) tout en ayant une adhérence appropriée sous effort transversal et sur chaussée revêtue d'eau grâce à la présence des rainures ou cavités formés sur les bandelettes souples, ces cavités servant de réservoirs de drainage.

On peut ainsi obtenir à la fois :
- une amélioration des performances en usure et en régularité d'usure,
- une meilleure résistance aux sollicitations latérales exercées sur le pneumatique (notamment lors de manoeuvres conduisant à un ripage/glissement par rapport au sol),
- une adhérence satisfaisante sur sol revêtu d'eau pour le type d'usage concerné.

Dans une variante de l'invention, la partie externe comprend au moins une incision d'orientation générale circonférentielle, cette au moins une incision étant fermée dans le contact du pneu avec le sol. De cette manière, on bénéficie d'arêtes additionnelles sans qu'il y ait de modification substantielle de la rigidité des bandelettes qu'elles soient rigides ou souples.

L'incision circonférentielle la plus proche du bord axialement à l'extérieur de la partie externe de la bande de roulement délimite avec ce bord axialement à l'extérieur une nervure de bord dont la largeur moyenne est préférentiellement au moins égale à 10% de la largeur totale W de la bande. On note au passage que la sculpture selon l'invention permet de réduire cette largeur de la nervure de bord comparativement aux sculptures usuelles pour ce type de pneu équipant des remorques pour poids lourd.

Préférentiellement, si P désigne la somme des largeurs circonférentielles D11 et D12 des bandelettes rigides et souples de la partie externe, alors la largeur circonférentielle D11 de chaque bandelette rigide est choisie pour être au moins égale 25% de la somme P des largeurs circonférentielles et au plus égale à 75% de ladite somme P.

Il est avantageux que l'on ait dans l'empreinte de contact mesurée aux conditions d'utilisation du pneu telles que définies dans la norme E.T.R.T.O., au moins deux bandelettes rigides et au moins deux bandelettes souples.

Préférentiellement, chaque bandelette souple est pourvue de rainures ou de cavités situées, par rapport au bord axialement externe de la bande de roulement, à une distance axiale supérieure à 30% de la largeur axiale LE de ladite bandelette, cette distance étant mesurée par rapport au bord axialement extérieur de la partie externe de la bande.

Afin d'assurer une plus grande pérennité à ce type de sculpture ainsi qu'un bon drainage, il est avantageux de prévoir radialement à l'intérieur de la sculpture selon l'invention, laquelle s'étend sur une partie seulement de l'épaisseur de la bande, une sculpture complémentaire formée de canaux connectés aux cavités s'ouvrant sur la surface de roulement de la bande à l'état neuf. Ces canaux connectés aux cavités peuvent être orientés circonférentiellement et/ou transversalement afin d'assurer un drainage de l'eau et de l'air capté dans les cavités à l'état neuf et jusqu'à une usure de la bande correspondant à la profondeur de la sculpture initiale (c'est-à-dire à la profondeur des cavités s'ouvrant sur la surface de roulement à l'état neuf). Après une usure partielle de la bande, correspondant à au moins 30% de l'épaisseur de la bande, ces canaux s'ouvrent sur la surface de roulement pour former de nouvelles cavités et éventuellement de nouvelles rainures.

Afin de correctement positionner la partie externe de la bande de roulement axialement vers l'extérieur du véhicule, il est intéressant de prévoir sur ces pneus un marquage indiquant la position de montage du pneu sur un véhicule poids lourd à plusieurs essieux non directionnels. Ce marquage facilite la mise en place du pneu sur le véhicule conformément à l'invention.

De façon avantageuse, la bande de roulement selon l'invention est en outre composée de deux matériaux différents disposés dans la largeur de ladite bande. La séparation entre ces deux matériaux est préférentiellement localisée au niveau de la rainure d'orientation générale circonférentielle séparant axialement la partie interne de la partie externe pour limiter une éventuelle différence d'usure entre les parties interne et externe.

Ces matériaux différents sont choisis pour - en combinaison avec chaque partie (interne ou externe), apporter au pneu un avantage en terme de performances. Par exemple, le matériau composant la partie interne de la bande est choisi pour avoir une meilleure performance d'adhérence sur sol mouillé comparée à celle du matériau composant la partie externe. Préférentiellement, l'écart de performance dans le test normalisé ISO 15222 effectué avec un véhicule analytique est d'au moins 10% entre les deux matériaux.

En adoptant ce matériau pour la partie interne, il est alors possible de choisir - pour matériau de la partie externe, un matériau ayant une plus grande résistance à l'usure par ripage ou glissement comparativement à celle du matériau de la partie interne. Cette résistance à l'usure par ripage est évaluée dans un test de roulage à vitesse faible sur un cercle de rayon égal à 15 m et dans lequel on mesure la perte de masse par usure pour un nombre de tours fixé au préalable.

Ainsi, grâce au dessin de sculpture de bande de roulement selon l'invention, il est possible d'adapter au mieux les matériaux composant ladite bande pour renforcer les effets bénéfiques de ce dessin sur les performances en roulage.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 montre une vue partielle en plan d'une variante de bande de roulement selon l'invention ;
La figure 2 montre une coupe selon la ligne II-II prise sur la figure 1 ;
La figure 3 montre une coupe selon la ligne III-III prise sur la figure 1 ;
La figure 4 montre une vue partielle en plan d'une deuxième variante de bande de roulement selon l'invention ;
La figure 5 montre une coupe selon la ligne V-V prise sur la figure 4 ;
La figure 6 montre une coupe selon la ligne VI-VI prise sur la figure 4.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

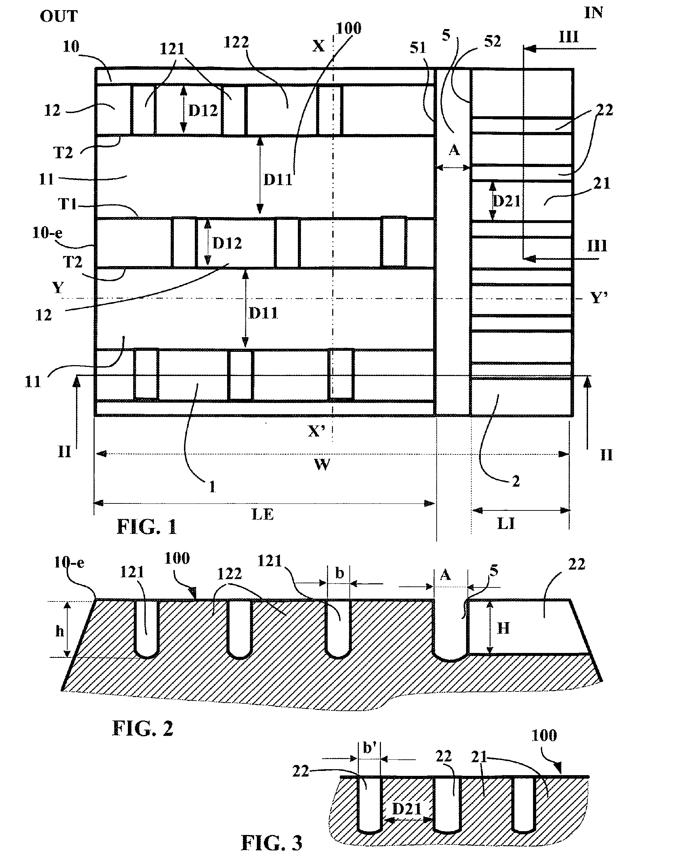

Sur la figure 1, on voit une partie d'une surface de roulement 100 d'une bande de roulement 10 selon l'invention. Cette surface de roulement 100 a une largeur W qui correspond à la largeur moyenne de l'empreinte de contact du pneu avec une chaussée, cette largeur W étant obtenue pour des conditions nominales d'usage du pneu à vitesse nulle.

La bande de roulement 10 a une épaisseur totale E correspondant à l'épaisseur qui peut être usée pendant toute la durée d'usage d'un pneu pourvu avec cette bande. Cette bande comprend une rainure 5 rectiligne d'orientation circonférentielle (indiquée par la direction XX') ; cette rainure 5 a une largeur A et une profondeur H et elle forme deux arêtes 51, 52 sur la surface de roulement 100, ces arêtes étant parallèles à la direction XX'. Cette rainure 5 délimite sur un côté une partie 1 de bande de largeur axiale LE et sur l'autre côté une partie 2 de largeur axiale LI. La partie de largeur axiale LE est dite partie externe 1 et la partie axiale de largeur axiale LI est dite partie interne 2. Ces deux largeurs axiales LE et LI ne sont pas égales et la partie externe 1 de largeur axiale LE, dans le cas présent supérieure à la largeur axiale LI de la partie interne 2, est destinée, une fois le pneu pourvu de cette bande de roulement monté sur un véhicule poids lourd, à être située axialement à l'extérieur du véhicule (indiqué par le terme "OUT" sur la figure). La largeur axiale LE est mesurée entre l'arête 51 la plus proche de l'axe médian de la bande et le bord axialement externe de ladite bande. La largeur axiale LI est mesurée entre l'arête 52 la plus éloignée de l'axe médian de la bande et le bord axialement interne 10-e de ladite bande.

Sur la partie externe 1 de largeur axiale LE, on observe la présence d'une pluralité de cavités 121 disposées de manière régulière à la fois dans la direction axiale (c'est-à-dire dans la direction transversale) et dans la direction circonférentielle. Dans le cas présent, ces cavités 121 ont une profondeur moyenne égale à celle de la rainure circonférentielle 5 et elles sont disposées dans chaque bandelette souple par groupe de trois dans la direction axiale (indiquée par la direction YY'). Sur chaque bandelette souple, et entre ces cavités 121 sont formées des portions pleines 122, c'est à dire des portions dépourvues de cavité.

Les cavités 121 de chaque groupe sont délimitées dans la direction circonférentielle par des droites virtuelles T1 et T2 parallèles à la direction axiale YY'. Dans la direction circonférentielle, les trois cavités 121 de chaque groupe sont disposées de façon qu'elles soient décalées les unes des autres dans la direction axiale par rapport à chaque groupe situé circonférentiellement de part et d'autre.

Ces droites virtuelles T1 et T2 parallèles à la direction axiale YY' sont construites pour être tangentes au contour des cavités de chaque groupe ; ces droites T1 et T2 délimitent des bandelettes que l'on dit "souples" du fait de la présence des cavités 121 et des bandelettes que l'on dit "rigides" du fait de l'absence de cavités.

Il est ainsi créé une alternance de bandelettes rigides 11 et de bandelettes souples 12 dans la direction circonférentielle.

Par bandelettes rigides, on entend ici que sous l'action d'une force orientée dans la direction axiale YY' et s'exerçant sur la surface de roulement de la partie externe 1, les bandelettes rigides 11 offrent sensiblement la rigidité de la matière caoutchoutique dans un volume correspondant au volume desdites bandelettes rigides présentes dans le contact avec la chaussée, donc sans aucune cavité. Dans l'exemple ici décrit et comme déjà indiqué, les bandelettes rigides 11 et les bandelettes souples 12 ont une épaisseur égale à l'épaisseur de matière à user qui est sensiblement égale à la profondeur H de la rainure circonférentielle 5.

Chaque bandelette souple 12 a une largeur axiale LE dans la direction YY' et une largeur circonférentielle D12 dans la direction XX'. Chaque bandelette rigide 11 a une même largeur axiale LE et une largeur circonférentielle D11 dans la direction XX'. Dans le cas présent, la largeur circonférentielle D11 des bandelettes rigides est supérieure à la largeur circonférentielle D12 des bandelettes souples d'environ 50%.

Sur la partie interne 2 de largeur axiale LI (repéré par le terme "IN" sur la figure 1), il est prévu une pluralité de rainures 22 d'orientation transversale (c'est-à-dire parallèle à la direction axiale YY') ; ces rainures 22 délimitent des nervures 21 de forme allongée et de largeur axiale LI et de largeur circonférentielle appropriée D21. Ces nervures 21 sont dépourvues de cavités et de rainures.

Grâce à ce dessin de sculpture à l'état neuf, la partie axialement externe offre aux sollicitations transversales de la chaussée sur la bande de roulement, notamment en configuration de ripage liée à une prise de virage, une grande rigidité grâce à la présence des bandelettes rigides encadrant les bandelettes souples, ces dernières grâce à la présence des cavités permettant d'avoir une performance satisfaisante sur chaussée revêtue d'eau par temps de pluie.

Pour bénéficier au mieux de l'effet technique de l'invention il est préférable que dans le passage du contact avec la chaussée, il y ait toujours au moins deux bandelettes souples et deux bandelettes rigides sur la partie externe.

Sur la figure 2 montrant une coupe de la bande réalisée suivant une ligne II-II de la figure 1, on voit que les cavités 121 des bandelettes souples 12 ont une largeur b et une profondeur h. Cette profondeur h est ici égale à la profondeur H de la rainure circonférentielle 5.

La figure 3 montre la même bande de roulement selon une ligne de coupe III-III prise sur la figure 1. On voit une pluralité de rainures transversales 22 de largeur b' délimitant des nervures 21 de largeur D21.

Dans le cas présent et comme on peut le constater sur la figure 1, il n'y a pas de relation spécifique entre les largeurs circonférentielles des nervures 21 et celle des bandelettes rigides 11 de la partie externe de la bande de roulement.

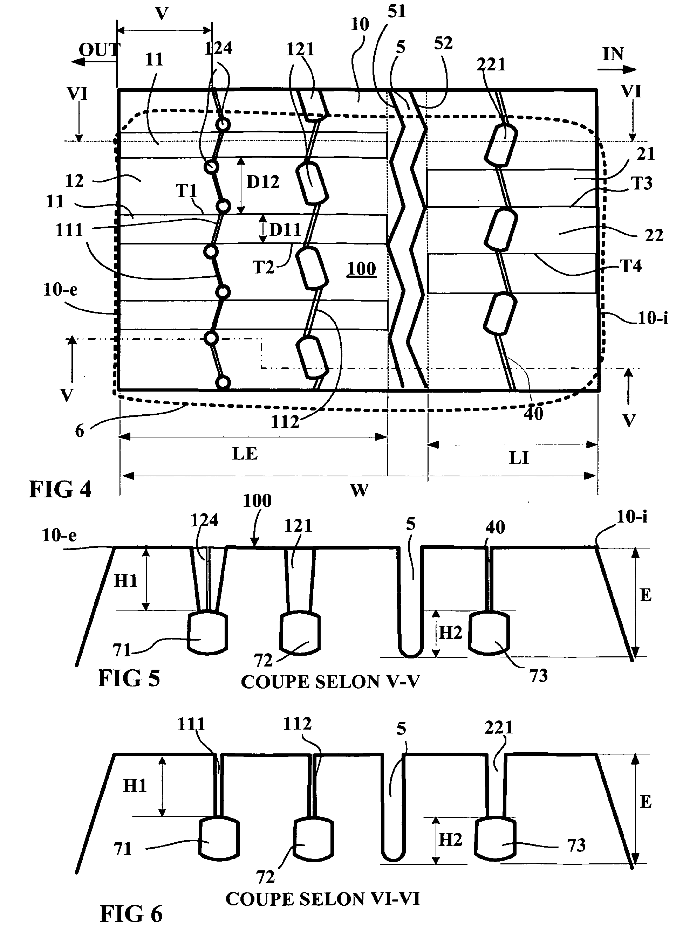

Dans une autre variante de réalisation montrée avec les figures 4, 5 et 6, la bande de roulement 10 selon l'invention est destinée à un pneu de dimension 385/55 R22.5. Cette bande 10 a une largeur totale W égale à 320 mm et comprend une rainure principale 5 en zigzag d'orientation circonférentielle s'ouvrant sur la surface de roulement 100 suivant deux arêtes 51, 52 ayant toutes les deux des pointes et des creux. Cette rainure principale 5 a une largeur moyenne de 13 mm (mesurée comme la distance moyenne séparant les parois en vis-à-vis délimitant cette rainure) et une profondeur égale à 15 mm. Cette rainure principale 5 divise la bande en deux parties de largeurs axiales différentes : une partie externe 1 de largeur axiale LE destinée à être placée axialement vers l'extérieur du véhicule et une partie interne 2 de largeur axiale LI destinée à être placée vers l'intérieur du véhicule. La largeur axiale L1 est prise entre un bord axialement externe 10-e de la bande et les pointes de l'arête 51 délimitant la rainure 5 circonférentielle, ladite arête 51 correspondant à l'arête située axialement le plus vers l'extérieur une fois en place sur un véhicule. Cette largeur axiale L1 est ici égale à 190 mm (soit 60% de la largeur totale W).

La partie interne 2 (repérée par "IN") et la partie externe 1 (repérée par "OUT") sont pourvues avec des creux ou cavités, respectivement 221et 121, qui ont une largeur égale à 14 mm, mesurée sur la surface de roulement 100 à l'état neuf, et une longueur maximale égale à 34 mm. Ces cavités, de profondeur égale à 10 mm dans le présent exemple, sont en outre formées avec un angle de dépouille uniforme moyen de 16.5°, de façon à réduire progressivement la section de chaque cavité s'ouvrant sur la surface de roulement au fur et à mesure de l'usure de la bande. En outre, la partie externe 1 comprend une pluralité de puits 124 de même profondeur que les cavités 121, ces puits étant disposés dans la direction circonférentielle de manière à former en combinaison avec les cavités 121 des bandelettes souples et des bandelettes rigides. Ces puits 124 ont une forme conique et sont reliées à un canal 71 circonférentiel, visible sur la figure 5, formé sous la surface de roulement, ce canal 71 étant destiné à former une nouvelle rainure après usure partielle de la bande. Les cavités 121 sont prolongées radialement à l'intérieur par un canal 72 orienté circonférentiellement.

Par bandelette rigide, on entend ici que sous l'action des efforts transversaux du sol sur la bande lors d'un virage ou d'une manoeuvre de braquage, les incisions d'orientation circonférentielle se sont fermées ou se ferment très rapidement pour générer une bande de matière quasi continue et donc de rigidité maximale. À l'inverse les bandelettes comprenant les cavités sont dites souples car sous l'action d'un effort transversal, la rigidité apparente de ces bandelettes est fonction de la plus ou moins grande fermeture de ces cavités et est en tout cas bien moindre que celle des bandelettes rigides.

Des droites T1 et T2 parallèles à la direction axiale YY' et tangentes aux cavités 121 ou aux puits 124 délimitent des bandelettes rigides 11 dépourvues de cavités et de puits et des bandelettes souples 12 pourvues de cavités et de puits.

Les bandelettes souples 12 et les bandelettes rigides 11 de la partie externe de la bande sont en outre pourvues avec une incision 112 formant des zigzags et s'étendant dans la direction circonférentielle pour relier les cavités 121. Cette incision 112 présente une largeur appropriée afin de pouvoir se refermer à partir de la surface de roulement et sur une grande profondeur (c'est-à-dire au moins 30% de l'épaisseur de la bande) lors du passage dans le contact avec la chaussée afin de mettre en contact les parois en vis-à-vis et obtenir ainsi une grande rigidité pour les bandelettes rigides 11. Axialement à l'extérieur de cette incision, on note la présence d'une autre incision 111 en zigzag, cette incision connectant entre eux la pluralité de puits 124 formés radialement dans la profondeur de la bande.

Tout se passe comme si ces incisions 111 et 112 ne changeaient pratiquement rien aux rigidités transversales de chaque bandelette rigide et de chaque bandelette souple dès lors que ces incisions se ferment au passage dans la zone de contact en roulage. Ainsi, il est possible de bénéficier de la présence d'arêtes supplémentaires sans modifier les rigidités des bandelettes souples et des bandelettes rigides. Lors d'une manoeuvre de virage pouvant générer un phénomène de ripage sur la chaussée, les efforts transversaux de contact exercés par la chaussée sur la bande de roulement sont en grande partie transmis par les bandelettes rigides 11, les incisions 111 et 112 étant fermées sur elles-mêmes.

Chaque bandelette souple a une largeur circonférentielle D12 égale à 40 mm. Et chaque bandelette rigide a une largeur circonférentielle D11 égale à 25 mm (soit 13% de la largeur axiale LE de la partie externe). On a superposé au dessin de la bande de roulement à l'état neuf montré sur la figure 4, le contour 6 de l'empreinte de contact du pneu de dimension 385/55 R 22.5 à ses conditions nominales (c'est-à-dire gonflé à sa pression de référence et supportant une charge telles que définies par la norme E.T.R.T.O.). Aux conditions nominales de ce pneu (pression égale à 9 bars, charge égale à 4500 daN), l'empreinte a une longueur dans la direction circonférentielle qui est égale à 155 mm. Grâce aux dimensions choisies pour les bandelettes souples et rigides, on a toujours au moins 2 bandelettes rigides dans le contact avec la chaussée pour résister aux efforts transversaux et au moins 2 bandelettes souples, c'est-à-dire un nombre approprié de cavités servant de réservoir pour capter l'eau présente sur la chaussée par temps de pluie. Dans le cas montré, on observe la présence dans l'empreinte de trois bandelettes souples et de trois bandelettes rigides.

Sur la partie interne 2 de largeur axiale LI, on observe la présence d'une incision 40 zigzag et d'orientation générale circonférentielle. Cette incision 40 est située à sensiblement mi distance entre le bord axialement interne 10-i de la bande et l'arête 52 de la rainure 5. Cette incision relie une pluralité de cavités 221. Cette incision 40 est apte, par ses dimensions, à se fermer au passage dans le contact avec la chaussée en roulage. Les cavités 221 de la partie interne 2 sont en décalage circonférentiel par rapport aux cavités 121 de la partie externe 1. Ainsi, il est formé une succession de bandelettes rigides 21 de largeur circonférentielle D21 et de bandelettes souples 22 de largeur circonférentielle D22 sur la partie interne 2, ces parties étant délimitées par des droites T3 et T4 parallèles à la direction axiale YY' et tangentes aux cavités 221. Ces bandelettes rigides et souples de la partie interne 2 sont disposées en alternance et de manière à être décalées circonférentiellement par rapport aux bandelettes rigides 11 et souples 12 de la partie externe 1.

Outre l'avantage en manoeuvre de braquage, la sculpture selon l'invention permet de réduire les volumes en creux présents sur la bande de roulement à l'état initial et donc de réduire de façon sensible l'épaisseur de la bande de roulement pour un volume global prédéterminé.

Dans cette variante, on répartit les volumes des creux et puits sur la partie externe 1 de façon que ces volumes aillent en augmentant en partant du bord axialement le plus à l'extérieur de la bande et en allant vers l'autre bord de la partie externe 1 pour être maximal au niveau de la rainure circonférentielle 5. Il en est de même mais en sens opposé pour la partie interne 2 en partant du bord axialement le plus à l'intérieur par rapport au véhicule et en allant vers la rainure circonférentielle.

De façon avantageuse, l'incision 111 axialement la plus à l'extérieur de la partie externe 1 est à une distance axiale moyenne V du bord extérieur de la bande de roulement au moins égale à 10% de la largeur totale W de la bande de roulement. Il a en effet été constaté, et cela de façon surprenante comparativement à ce qui est observé avec les bandes de roulement de l'art antérieur, que la sculpture selon l'invention permettait de positionner cette incision plus près du bord axialement extérieur de la bande de roulement tout en ayant une résistance aux agressions satisfaisante sur la partie la plus à l'extérieur de la bande. Dans le cas présent, l'incision 111 est située à une distance moyenne égale à 64 mm (soit 20% de la largeur W = 320 mm).

Afin d'obtenir une performance pérenne avec l'usure, on prévoit, après une première partie de sculpture conforme à l'invention, une deuxième partie dans l'épaisseur de la bande non conforme à l'invention. Cette deuxième partie devient active dans le contact avec la chaussée après usure de la partie comportant une sculpture conforme à l'invention. Cette deuxième partie dans l'épaisseur comprend des cavités 71, 72, 73 (visibles sur les figures 5 et 6) destinées à s'ouvrir sur la nouvelle surface de roulement après usure partielle pour former de façon usuelle des rainures dans au moins une direction.

Après usure partielle, la bande montre alors quatre rainures ouvertes sur la surface de roulement comme cela est visible sur les figures 5 et 6 qui montrent des coupes selon des lignes V-V et VI-VI respectivement, prises sur la figure 4.

Sur la figure 5 et sur la figure 6 on distingue, après une profondeur H1 correspondant à la profondeur des cavités 121, 221 et des puits 124, la formation de canaux 71,72, 73 qui en s'ouvrant sur la surface de roulement après une usure partielle correspondant à la profondeur H1, égale ici à 10 mm, forment trois nouvelles rainures d'orientation circonférentielle et de profondeur H2, égale à 5 mm. Dans cette variante la sculpture selon l'invention est présente et active sur une épaisseur H1 qui est ici sensiblement égale à 66% de l'épaisseur totale égale à 15 mm de matière à user.

Dans le cas présent, il faut considérer que la sculpture selon l'invention est présente entre la surface de roulement à l'état neuf et une profondeur H1 à partir de laquelle apparaissent de nouvelles rainures.

L'invention décrite avec le support de ces deux variantes ne doit pas être limitée à ces deux variantes et diverses modifications peuvent y être apportées sans sortir de son cadre. Notamment, les largeurs circonférentielles des bandelettes rigides (ou des bandelettes souples) qui sont montrées constantes dans les deux variantes décrites peuvent être différentes au tour de roue tout en respectant les domaines de valeurs préférentielles. C'est même un avantage de pouvoir faire varier ces largeurs afin d'obtenir une réduction du bruit de roulage.

## Revendications

1. **-** Pneu pour véhicule poids lourd de type remorque comprenant :
- des bourrelets destinés à être en contact avec une jante de montage, ces bourrelets se prolongeant radialement vers l'extérieur par des flancs eux mêmes se raccordant de part et d'autre d'une partie de sommet, cette partie de sommet étant recouverte par une bande de roulement (10) d'épaisseur E ayant une surface de roulement (100), ce pneu comprenant une armature de carcasse ancrée dans les bourrelets, cette armature s'étendant dans les flancs et dans la partie de sommet, la partie de sommet du pneu comprenant une armature de sommet,
- la bande de roulement (10) étant pourvue d'un dessin de sculpture asymétrique sur au moins une épaisseur égale à 30% de l'épaisseur de la bande, de façon à former une partie externe (1) de largeur axiale LE destinée à être positionnée axialement vers l'extérieur d'un véhicule lorsque le pneu est monté sur ce véhicule et une partie interne (2) de largeur axiale LI située dans le prolongement axial de la partie externe (1),
- la partie interne (2) et la partie externe (1) étant séparées par une rainure (5) d'orientation générale circonférentielle, cette rainure (5) coupant la surface de roulement (100) selon deux arêtes (51, 52), une arête axialement externe (51) et une arête axialement interne (52),
cette bande de roulement (10) étant **caractérisée en ce que** :
- la partie externe (1) de la bande comprend, dans la direction circonférentielle, une succession de bandelettes rigides (11) de largeur circonférentielle D11 et de largeur axiale LE dépourvues de toute rainure ou cavité s'ouvrant sur la surface de roulement à l'état neuf et de bandelettes souples (12) de largeur circonférentielle D12 et de largeur axiale LE pourvues de rainures (121) s'étendant sur toute la largeur circonférentielle D12 de ces bandelettes souples,
- les bandelettes rigides (11) ayant une largeur circonférentielle D11 au moins égale à 7% de la largeur axiale LE de la partie externe (1).

2. **-** Pneu selon la revendication 1 **caractérisé en ce que** les bandelettes rigides (11) ont une largeur circonférentielle D11 au moins égale à 15% de la largeur axiale LE de la partie externe (1).

3. **-** Pneu selon la revendication 1 ou la revendication 2 **caractérisé en ce que** la largeur axiale LE de la partie externe (1) est au moins égale à 40% de la largeur W de la bande de roulement (10).

4. **-** Pneu selon l'une la revendication 3 **caractérisé en ce que** la largeur axiale LE de la partie externe (1) est au plus égale à 80% de la largeur W totale de contact de la bande de roulement (10).

5. **-** Pneu selon l'une quelconque des revendications 1 à 4 **caractérisé en ce que** la partie externe (1) comprend au moins une incision (111, 112) d'orientation générale circonférentielle, cette au moins une incision étant fermée dans le contact du pneu avec la chaussée.

6. - Pneu selon la revendication 5 **caractérisé en ce que** l'incision (111, 112) formée sur la partie externe (1) est située par rapport au bord axialement le plus à l'extérieur de la bande de roulement à une distance moyenne au moins égale à 10% de la largeur totale W de la bande de roulement (10).

7. **-** Pneu selon la revendication 5 ou la revendication 6 **caractérisé en ce que** l'incision (111, 112) d'orientation générale circonférentielle relie entre elles une pluralité de cavités (121, 124) situées dans les bandelettes souples (12), ces cavités (121, 124) ne se fermant pas dans le contact.

8. **-** Pneu selon l'une quelconque des revendications 1 à 5 **caractérisé en ce que** chaque bandelette souple (12) comprend une pluralité de cavités (221) orientées essentiellement dans la direction circonférentielle, ces cavités (221) étant réparties dans la direction axiale de manière à être décalés axialement les unes par rapport aux autres cavités situées circonférentiellement de part et d'autre.

9. **-** Pneu selon l'une quelconque des revendications 1 à 8 **caractérisé en ce que**, P désignant la somme des largeurs circonférentielles D11 et D12 des bandelettes rigides (11) et des bandelettes souples (12), la largeur circonférentielle D11 de la bandelette rigide (11) est au moins égale 25% de la somme P et au plus égale à 75% de ladite somme P.

10. - Pneu selon l'une quelconque des revendications 1 à 8 **caractérisé en ce que** la bande de roulement est en outre composée de deux matériaux différents disposés dans la largeur de ladite bande.

11. - Pneu selon la revendication 10 **caractérisé en ce que** la séparation entre les deux matériaux est localisée au niveau de la rainure d'orientation générale circonférentielle séparant axialement la partie interne de la partie externe.

12. - Pneu selon l'une quelconque des revendications 10 ou 11 **caractérisé en ce que** le matériau composant la partie interne de la bande a une adhérence sur sol mouillé supérieure d'au moins 10% à l'adhérence sur sol mouillé du matériau composant la partie externe, cette adhérence étant mesurée selon un test normalisé ISO 15222 et **en ce que** la résistance à l'usure par ripage du matériau de la partie externe est supérieure à la résistance à l'usure par ripage du matériau de la partie interne.

13. **-** Pneu pour véhicule poids lourd selon l'une quelconque des revendications 1 à 12 comprenant un marquage indiquant la position de montage du pneu sur un véhicule poids lourd à plusieurs essieux non directionnels, de manière à correctement positionner la partie externe de la bande de roulement axialement vers l'extérieur du véhicule.

## Patentansprüche

1. Reifen für Schwerlastfahrzeuge des Anhängertyps, der Folgendes aufweist:
- Wülste, die dazu bestimmt sind, mit einer Montagefelge in Berührung zu sein, wobei sich diese Wülste radial nach außen durch Flanken verlängern, die sich wiederum zu beiden Seiten eines Scheitelteils anschließen, wobei dieser Scheitelteil durch eine Laufdecke (10) mit der Stärke E abgedeckt ist, die eine Lauffläche (100) hat, wobei dieser Reifen eine Karkassenbewehrung aufweist, die in den Wülsten verankert ist, wobei sich diese Bewehrung in die Flanken und in den Scheitelteil erstreckt, wobei der Scheitelteil des Reifens eine Scheitelbewehrung aufweist,
- wobei die Laufdecke (10) mit einem asymmetrischen Profil auf mindestens einer Stärke gleich 30 % der Stärke der Decke versehen ist, so dass ein äußerer Teil (1) mit axialer Breite LE, der dazu bestimmt ist, axial zum Äußeren eines Fahrzeugs hin positioniert zu sein, wenn der Reifen auf dieses Fahrzeug montiert ist, und ein innerer Teil (2) mit axialer Breite LI, der in der axialen Verlängerung des äußeren Teils (1) liegt, gebildet ist,
- wobei der innere Teil (2) und der äußere Teil (1) durch eine Rille (5) mit allgemein umfänglicher Ausrichtung getrennt sind, wobei diese Rille (5) die Lauffläche (100) entlang von zwei Graten (51, 52), einem axial äußeren Grat (51) und einem axial inneren Grat (52), schneidet,
wobei diese Laufdecke (10) **dadurch gekennzeichnet ist, dass**:
- der äußere Teil (1) der Decke in die umfängliche Richtung eine Abfolge steifer Wulstfahnen (11) mit umfänglicher Breite D11 und axialer Breite LE, die keine Rille oder keinen Hohlraum aufweisen, die sich auf der Lauffläche im neuen Zustand öffnen, und biegsamer Wulstfahnen (12) mit umfänglicher Breite D12 und axialer Breite LE aufweist, die mit Rillen (121) versehen sind, die sich auf der gesamten umfänglichen Breite D12 dieser biegsamen Wulstfahnen erstrecken,
- die steifen Wulstfahnen (11) eine umfängliche Breite D11 von mindestens gleich 7 % der axialen Breite LE des äußeren Teils (1) haben.

2. Reifen nach Anspruch 1, **dadurch gekennzeichnet, dass** die steifen Wulstfahnen (11) eine umfängliche Breite D11 haben, die mindestens gleich 15 % der axialen Breite LE des äußeren Teils (1) ist.

3. Reifen nach Anspruch 1 oder Anspruch 2, **dadurch gekennzeichnet, dass** die axiale Breite LE des äußeren Teils (1) mindestens gleich 40 % der Breite W der Laufdecke (10) ist.

4. Reifen nach Anspruch 3, **dadurch gekennzeichnet, dass** die axiale Breite LE des äußeren Teils (1) höchstens gleich 80 % der Gesamtberührungsbreite W der Laufdecke (10) ist.

5. Reifen nach einem der Ansprüche 1 bis 4, **dadurch gekennzeichnet, dass** der äußere Teil (1) mindestens einen Einschnitt (111, 112) mit allgemein umfänglicher Ausrichtung aufweist, wobei dieser mindestens eine Einschnitt bei der Berührung des Reifens mit der Fahrbahn geschlossen ist.

6. Reifen nach Anspruch 5, **dadurch gekennzeichnet, dass** der Einschnitt (111, 112), der auf dem äußeren Teil (1) ausgebildet ist, in Bezug zu dem am weitesten außen liegenden axialen Rand der Laufdecke in einer mittleren Entfernung von mindestens gleich 10 % der Gesamtbreite W der Laufdecke (10) liegt.

7. Reifen nach Anspruch 5 oder Anspruch 6, **dadurch gekennzeichnet, dass** der Einschnitt (111, 112) mit allgemein umfänglicher Ausrichtung mehrere Hohlräume (121, 124) untereinander verbindet, die in den biegsamen Wulstfahnen (12) liegen, wobei sich diese Hohlräume (121, 124) bei der Berührung nicht schließen.

8. Reifen nach einem der Ansprüche 1 bis 5, **dadurch gekennzeichnet, dass** jede biegsame Wulstfahne (12) eine Vielzahl von Hohlräumen (221) aufweist, die im Wesentlichen in die umfängliche Richtung ausgerichtet sind, wobei diese Hohlräume (221) in die axiale Richtung derart verteilt sind, dass sie axial von den anderen Hohlräumen, die umfänglich zu beiden Seiten liegen, versetzt sind.

9. Reifen nach einem der Ansprüche 1 bis 8, **dadurch gekennzeichnet, dass**, wenn P die Summe der umfänglichen Breiten D11 und D12 der starren Wulstfahnen (11) und der biegsamen Wulstfahnen (12) bezeichnet, die umfängliche Breite D11 der starren Wulstfahne (11) mindestens gleich 25 % der Summe P und maximal gleich 75 % der Summe P ist.

10. Reifen nach einem der Ansprüche 1 bis 8, **dadurch gekennzeichnet, dass** die Laufdecke außerdem aus zwei unterschiedlichen Werkstoffen besteht, die in der Breite der Decke angeordnet sind.

11. Reifen nach Anspruch 10, **dadurch gekennzeichnet, dass** die Trennung zwischen den zwei Werkstoffen auf dem Niveau der Rille mit allgemein umfänglicher Ausrichtung, die den inneren Teil axial von dem äußeren Teil trennt, liegt.

12. Reifen nach einem der Ansprüche 10 oder 11, **dadurch gekennzeichnet, dass** der Werkstoff, der den inneren Teil der Decke bildet, eine Haftung auf nassem Boden aufweist, die um mindestens 10 % größer ist als die Haftung auf nassem Boden des Werkstoffs, der den äußeren Teil bildet, wobei diese Haftung gemäß einem genormten ISO 15222-Test gemessen wird, und dass die Abnutzungsfestigkeit gegenüber Scheuern des Werkstoffs des äußeren Teils größer ist als die Abnutzungsfestigkeit gegenüber Scheuern des Werkstoffs des inneren Teils.

13. Reifen für Schwerlastfahrzeuge nach einem der Ansprüche 1 bis 12, der eine Markierung aufweist, die die Montageposition des Reifens auf einem Schwerlastfahrzeug mit mehreren nicht lenkenden Achsen derart anzeigt, dass der äußere Teil der Laufdecke axial richtig zum Äußeren des Fahrzeugs positioniert ist.

## Claims

1. Tyre for heavy goods vehicle of the trailer type comprising:
- beads designed to be in contact with a fitment rim, these beads extending radially outwards through side walls themselves being connected on either side of a crown portion, this crown portion being covered by a tread (10) with a thickness E having a tread surface (100), this tyre comprising a carcass reinforcement anchored in the beads, this reinforcement extending into the side walls and into the crown portion, the crown portion of the tyre comprising a crown reinforcement,
- the tread (10) being provided with an asymmetrical sculpture design over at least one thickness equal to 30% of the thickness of the tread, so as to form an outer portion (1) of axial width LE designed to be positioned axially towards the outside of a vehicle when the tyre is fitted on this vehicle and an inner portion (2) of axial width LI situated in the axial extension of the outer portion (1),
- the inner portion (2) and the outer portion (1) being separated by a groove (5) of generally circumferential orientation, this groove (5) cutting the tread surface (100) along two ridges (51, 52), one axially outer ridge (51) and one axially inner ridge (52),
this tread (10) being **characterized in that**:
- the outer portion (1) of the tread comprises, in the circumferential direction, a succession of rigid strips (11) of circumferential width D11 and of axial width LE having no groove or cavity opening onto the tread surface in the new state and of flexible strips (12) of circumferential width D12 and of axial width LE provided with grooves (121) extending over the whole circumferential width D12 of these flexible strips,
- the rigid strips (11) having a circumferential width D11 at least equal to 7% of the axial width LE of the outer portion (1).

2. Tyre according to Claim 1, **characterized in that** the rigid strips (11) have a circumferential width D11 at least equal to 15% of the axial width LE of the outer portion (1).

3. Tyre according to Claim 1 or Claim 2, **characterized in that** the axial width LE of the outer portion (1) is at least equal to 40% of the width W of the tread (10).

4. Tyre according to Claim 3, **characterized in that** the axial width LE of the outer portion (1) is at most equal to 80% of the total contact width W of the tread (10).

5. Tyre according to any one of Claims 1 to 4, **characterized in that** the outer portion (1) comprises at least one incision (111, 112) of generally circumferential orientation, this at least one incision being closed in the contact of the tyre with the road surface.

6. Tyre according to Claim 5, **characterized in that** the incision (111, 112) formed on the outer portion (1) is situated relative to the axially outermost edge of the tread at an average distance at least equal to 10% of the total width W of the tread (10).

7. Tyre according to Claim 5 or Claim 6, **characterized in that** the incision (111, 112) of generally circumferential orientation is connecting together a plurality of cavities (121, 124) situated in the flexible strips (12), these cavities (121, 124) not closing in the contact.

8. Tyre according to any one of Claims 1 to 5, **characterized in that** each flexible strip (12) comprises a plurality of cavities (221) oriented essentially in the circumferential direction, these cavities (221) being distributed in the axial direction so as to be offset axially from the other cavities situated circumferentially on either side.

9. Tyre according to any one of Claims 1 to 8, **characterized in that**, where P is the total of the circumferential widths D11 and D12 of the rigid strips (11) and of the flexible strips (12), the circumferential width D11 of the rigid strip (11) is at least equal to 25% of the total P and at most equal to 75% of the said total P.

10. Tyre according to any one of Claims 1 to 8, **characterized in that** the tread also consists of two different materials placed in the width of the said tread.

11. Tyre according to Claim 10, **characterized in that** the separation between the two materials is located at the groove of generally circumferential orientation axially separating the inner portion from the outer portion.

12. Tyre according to any one of Claims 10 and 11, **characterized in that** the material forming the inner portion of the tread has a grip on wet ground that is at least 10% greater than the grip on wet ground of the material forming the outer portion, this grip being measured according to a standard test ISO 15222 and **in that** the resistance to wear by a scrubbing of the material of the outer portion is greater than the resistance to wear by scrubbing of the material of the inner portion.

13. Tyre for heavy goods vehicle according to any one of Claims 1 to 12, comprising a marking indicting the position of fitment of the tyre on a heavy goods vehicle with several non-steered axles, so as to correctly position the outer portion of the tread axially towards the outside of the vehicle.
